# EUROPÄISCHE PATENTSCHRIFT

(11) **EP 0 834 386 B1**
(45) Veröffentlichungstag und Bekanntmachung des Hinweises auf die Patenterteilung: **14.11.2001**
(21) Anmeldenummer: 97115683.1
(22) Anmeldetag: 10.09.1997
(51) Int. Cl.: B29C 47/22, B29C 47/06

(54) **Vorrichtung zur Herstellung von Kunststoff-Verbund-Rohren**
Apparatus for producing double walled plastic pipes
Dispositif de fabrication d'un tuyau plastique à double paroi

(30) Priorität: 04.10.1996 DE 19640928
(43) Veröffentlichungstag der Anmeldung: 08.04.1998
(73) Patentinhaber: Hegler, Ralph-Peter, Dr.-Ing., 97688 Bad Kissingen (DE)
(72) Erfinder: Hegler, Ralph-Peter, Dr.-Ing., 97688 Bad Kissingen (DE)
(74) Vertreter: Rau, Manfred, Dr. Dipl.-Ing.

(56) Entgegenhaltungen:
- WO-A-94/09964
- DE-A- 4 010 404
- US-A- 3 221 371
- US-A- 4 846 660
- US-A- 5 346 384
- US-A- 5 466 402

## Beschreibung

Die Erfindung betrifft eine Vorrichtung zur Herstellung von Kunststoff-Verbund-Rohren gemäß dem Oberbegriff des Anspruches 1.

Bei einer derartigen, aus der EP 0 509 216 B1 (entsprechend US-PS 5 346 384) bekannten Vorrichtung zur Herstellung von Verbund-Rohren weist deren Spritzkopf einen Düsenkörper auf, an dem unter anderem ein Außendüsen-Mantel mittels einer Justiereinrichtung angebracht ist. Mittels dieser Justiereinrichtung kann dieser Außendüsen-Mantel radial zur Mittel-Längs-Achse verstellt werden, so daß die Weite des von diesem Außendüsen-Mantel begrenzten Außen-Kanals über seinen Umfang so eingestellt werden kann, daß aus einer nachgeordneten Außen-Düse ein Schmelze-Schlauch austritt, der über seinen Umfang eine konstante Dicke aufweist. Insbesondere bei der Herstellung von Verbund-Rohren mit größeren Durchmessern ist hiermit eine entsprechende Einstellung des das Innenrohr des Verbund-Rohres erzeugenden Schmelze-Stroms nicht möglich.

Aus der DE 40 10 404 A1 ist eine Extrudiervorrichtung mit einer Extrusionsdüse zur gemeinsamen Extrusion mehrerer Extrudate bekannt. Zwischen zwei Extrusions-Kanälen ist eine Isoliereinrichtung vorgesehen, so daß die Temperatur jedes Extrusions-Kanals getrennt geregelt werden kann und es somit möglich ist, zwei verschiedene Extrudate bei verschiedenen Temperaturen gemeinsam zu extrudieren. Die beiden Extrusions-Kanäle sind mit verschiedenen Extrudern verbunden. Die Extrusions-Kanäle sind jeweils unabhängig voneinander hinsichtlich ihres Querschnitts einstellbar.

Eine relative Justierung zweier konzentrischer Extrusions-Kanäle, die durch einen Extruder gespeist werden, ist nicht bekannt.

Aus der WO 94/09 964 ist ein Extruderkopf zur Herstellung einwandiger Rohre bekannt. Dieser weist einen ringförmigen Schmelze-Kanal auf, dessen Querschnitt einstellbar ist. Nicht bekannt ist die relative Einstellung des Querschnitts zweier konzentrischer Schmelze-Kanäle, die von einem Extruder gespeist werden.

Aus der DE 29 11 833 C3 ist ein Spritzkopf für eine Vorrichtung zur Herstellung von Kunststoff-Verbund-Rohren mit äußeren Querrillen bekannt, bei dem in einem Spritzkanal ein Zwischenrohr mit stromaufwärts gelegener Schneidkante zum Aufteilen des Schmelze-Stroms und mit nachfolgenden Lenkflächen vorgesehen ist. Hierdurch wird der Schmelze-Strom in einander konzentrisch umgebende Ströme aufgeteilt. Um eine gleiche Austrittsgeschwindigkeit dieser beiden Schmelze-Ströme aus einer nachgeordneten Innen-Düse bzw. einer nachgeordneten Außen-Düse zu erreichen, sind Heiz- und/oder Kühleinrichtungen vorgesehen. Hiermit soll insbesondere eine Verarbeitung von PVC zu Verbund-Rohren möglich sein, die ein glattes Innenrohr und ein gewelltes Außenrohr aufweisen. Mit dieser bekannten Vorrichtung ist nicht vermeidbar, daß das Innenrohr und/oder das gewellte Außenrohr des Verbund-Rohres über den Außenumfang unterschiedliche Wandstärken aufweisen.

Aus der EP 208 055 B2 ist eine Vorrichtung zur Herstellung solcher Verbund-Rohre bekannt, deren Spritzkopf einen Innen-Kanal und einen Außen-Kanal aufweist. Die Weite des Außen-Kanals kann von außen mittels eines Stellrings über den Umfang verändert werden. Die Weite des Innen-Kanals kann von außen durch Verstellung des Innen-Düsendorns mittels Schrauben verändert werden. Die Verstellbarkeit des Innen-Düsendorns setzt voraus, daß das Gesamtsystem zur Vermeidung von Undichtigkeiten axial sehr stark verspannt ist. Dies wiederum hat zur Folge, daß große Verstellkräfte notwendig sind. Wenn trotzdem Undichtigkeiten auftreten, dann fließt die aus dem Innen-Kanal austretende Schmelze nach innen und verbrennt dort. Dies führt zu erheblichen Reinigungsproblemen.

Aus dem Prospekt "Rollepaal" der Firma Machinefactory 'De Rollepaal' bv, 7701 Dedemsvaart, Niederlande, ist es bekannt, zur Herstellung von Vollwandrohren Ultraschall-Wanddicken-Meßeinrichtungen vorzusehen. Bei Abweichung der Rohr-Wanddicke von einem vorgegebenen Sollwert wird in der Düse mittels Heizungen eine Zentrierung des das Rohr bildenden Schlauches durchgeführt, wobei der für PVC typische Effekt ausgenutzt wird, daß das Wandgleitverhalten der PVC-Schmelze und damit der Durchsatz der Schmelze durch die Düse sehr stark von der Wandtemperatur abhängig ist.

Der Erfindung liegt die Aufgabe zugrunde, den Spritzkopf für eine Vorrichtung der gattungsgemäßen Art so auszugestalten, daß damit Verbund-Rohre hergestellt werden können, deren Innenrohr und deren Außenrohr über ihren Umfang gleichbleibende Wandstärke aufweisen.

Diese Aufgabe wird durch die Merkmale des kennzeichnenden Teils des Patentanspruches 1 gelöst.

Der Wirkungsmechanismus ist derart, daß durch Verstellung der zweiten Justiereinrichtung der Spritzkanal zwischen Anschlußteil und Düsenkörper derart zentriert wird, daß im Innen-Kanal ein Schmelze-Strom fließt, der über den ganzen Umfang verteilt eine gleiche Schmelze-Menge pro Zeiteinheit transportiert, so daß aus der Innen-Düse ein Schlauch austritt, der über seinen ganzen Umfang gleiche Wandstärke aufweist. Soweit bei der Einstellung der zweiten Justiereinrichtung die im Außen-Kanal strömende Schmelze nicht einen derart gleichmäßigen Schlauch bildet, kann durch entsprechende Verstellung des Außendüsen-Mantels die Zentrierung des Außen-Kanals so verändert werden, daß auch aus dessen Außen-Düse ein Schlauch austritt, der über seinen gesamten Umfang gleiche Wanddicke aufweist. Durch die mittels der ersten Justiereinrichtung vorgenommenen Verstellungen wird der Schmelze-Strom im Innen-Kanal, der mittels der zweiten Justiereinrichtung eingestellt ist, nicht mehr beeinflußt. Die beiden Justierungen mit der zweiten Justiereinrichtung und der ersten Justiereinrichtung können nacheinander während der laufenden Produktion vorgenommen werden. Sollten Undichtigkeiten auftreten, so würde die austretende Schmelze nach außen austreten mit der Folge, daß eine solche Undichtigkeit sofort erkannt würde und daß keine innere Verunreinigung des Rohrkopfes stattfindet.

Vorteilhafte Ausgestaltungen ergeben sich aus den Unteransprüchen 2 bis 6. Insbesondere bei relativ großen Rohrdurchmessern, und bei Einsatz von PVC als Schmelze kann noch eine thermische Zentrierung genutzt werden, wie sie in den Ansprüchen 7 bis 10 angegeben ist.

Ein Ausführungsbeispiel der Erfindung ist in der Zeichnung dargestellt und wird im folgenden näher beschrieben.

Es zeigt
- Fig. 1: eine Draufsicht auf eine Vorrichtung zur Herstellung von Kunststoff-Rohren,
- Fig. 2: einen vertikalen Längsschnitt durch den Spritzkopf der Vorrichtung gemäß der Schnittlinie II-II in Fig. 3, und
- Fig. 3: einen Querschnitt durch den Spritzkopf entsprechend der Schnittlinie III-III in Fig. 2.

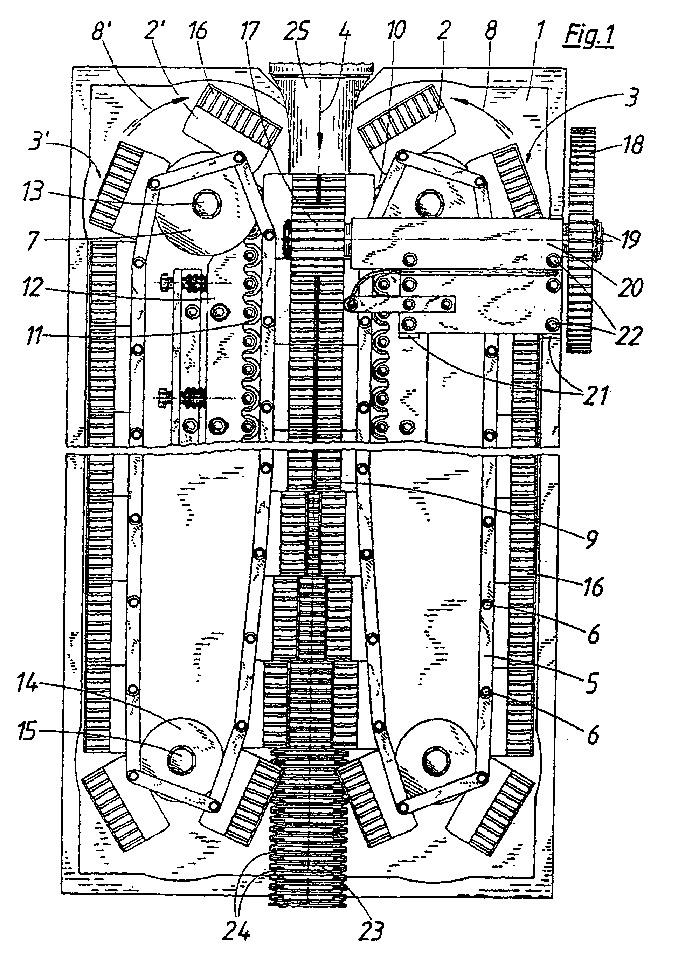

Wie Fig. 1 erkennen läßt, weist eine Vorrichtung zur Herstellung von Kunststoff-Verbund-Rohren mit Querrillen einen Maschinentisch 1 auf, auf dem Halbkokillen 2 bzw. 2' angeordnet sind, die jeweils zu zwei sogenannten Ketten 3 bzw. 3' miteinander verbunden sind. Hierzu ist an jeder Halbkokille 2 bzw. 2' in ihrem außenliegenden, in Produktionsrichtung 4 vorderen Bereich eine Lasche 5 mittels eines Anlenkbolzens 6 angelenkt, die an der entsprechenden Stelle der nachfolgenden Halbkokille 2 bzw. 2' ebenfalls mittels eines solchen Anlenkbolzens 6 angebracht ist. Die so gebildeten Ketten 3, 3' sind an ihrem in Produktionsrichtung 4 gesehen rückwärtigen Ende über als sogenannte Einlaufrollen 7 dienende Umlenkräder geführt. Die einzelnen Halbkokillen 2, 2' werden beim Umlauf der Ketten 3, 3' entsprechend den Umlaufrichtungspfeilen 8 bzw. 8' in eine Formstrekke 9 eingeschwenkt, in der jeweils zwei Halbkokillen 2, 2' zu einem Kokillenpaar vereinigt werden, wobei wiederum in Produktionsrichtung 4 hintereinanderfolgende Kokillenpaare dicht an dicht liegen. Um ein schnelles Schließen der Halbkokillen 2,2' zu einer parallelen und aneinanderliegenden Stellung zu erreichen, sind sogenannte Schließrollen 10 vorgesehen, die die in Produktionsrichtung 4 hinteren Enden der Halbkokillen 2, 2' beschleunigt zusammenführen.

In der Formstrecke 9 selber werden die aneinanderliegenden Halbkokillen 2, 2' mittels Führungsrollen 11, die in Führungsleisten 12 drehbar gelagert sind, gegeneinander gedrückt. Die Einlaufrollen 7 sind um Achszapfen 13 drehbar am Maschinentisch 1 angebracht. Am in Produktionsrichtung 4 vorderen Ende des Maschinentisches 1 sind ebenfalls als Umlenkräder dienende Rücklaufrollen 14 um Achszapfen 15 drehbar gelagert, um die die Ketten 3 bzw. 3' umgelenkt und zu den Einlaufrollen 7 zurückgeführt werden. Wie Fig. 1 zu entnehmen ist, enden die Führungsleisten 12 mit Führungsrollen 11 schon um die Länge mehrerer Halbkokillen 2 bzw. 2' vor den Rücklaufrollen 14, so daß die Halbkokillen 2 bzw. 2' wieder parallel zueinander und quer zur Produktionsrichtung 4 voneinander wegbewegt werden können, bevor sie von den Rücklaufrollen 14 verschwenkt werden.

An der Oberseite der Halbkokillen 2, 2' ist eine Verzahnung 16 ausgebildet, wobei die beiden Verzahnungen 16 der einander paarweise zugeordneten Halbkokillen 2, 2' miteinander fluchten, so daß von oben ein gemeinsames Antriebsritzel 17 in diese Verzahnung 16 eingreifen kann, das die Halbkokillen 2, 2' in der Formstrecke 9 als geschlossene Form durch die Formstrecke 9 schiebt. Der Antrieb dieses Antriebsritzels 17 erfolgt in üblicher Weise von einem nicht dargestellten Motor über ein Antriebszahnrad 18, das auf einer Welle 19 drehfest befestigt ist, die wiederum das Antriebsritzel 17 trägt. Die Welle 19 ist in einem Lagerbock 20 gelagert, der über Distanzprismen 21 gegenüber dem Maschinentisch abgestützt und mit letzterem mittels Schrauben 22 fest verbunden ist.

Auf der dargestellten Vorrichtung werden Kunststoff-Rohre 23, und zwar sogenannte Verbund-Rohre, mit unter anderem einer Querprofilierung, d.h. mit über deren Umfang umlaufenden Rillen 24 hergestellt.

Wenn davon gesprochen wurde, daß die Halbkokillen 2, 2' auf einem Maschinentisch 1 angeordnet sind, dann soll damit zum Ausdruck gebracht werden, daß sie ganz allgemein in einem Maschinengestell in irgendeiner Form geführt und verschiebbar sind.

Zur Herstellung der Rohre 23 ist ein Extruder vorgesehen, von dem nur der weiter unten noch genauer zu beschreibende Rohrkopf 25 angedeutet ist, wobei es sich bei dem Rohrkopf 25 um den Spritzkopf des Extruders handelt.

Der Rohrkopf 25 ist mittels eines ersten Justierrings 26 an einem Anschlußteil 27 des nicht dargestellten Extruders befestigt. Er weist einen im wesentlichen ringförmigen Tragring 28 auf, an dem alle wesentlichen Teile des Spritzkopfes befestigt sind. Dieser Tragring weist konzentrisch zu einer gemeinsamen Mittel-Längs-Achse 29 des Rohrkopfes 25 einen in Produktionsrichtung 4 vorspringenden Ringbund 30 auf. In diesem Ringbund 30 ist mittels einer Innen-Gewinde-Verbindung 31 ein Innen-Düsendorn 32 befestigt. Auf dem Außenumfang des Ringbundes 30 ist mittels einer Außen-Gewinde-Verbindung 33 ein Außen-Düsendorn 34 befestigt. Schließlich ist wiederum konzentrisch zur Achse 29 noch ein Außendüsen-Mantel 35 mittels eines zweiten Justierrings 36 am Tragring 28 befestigt.

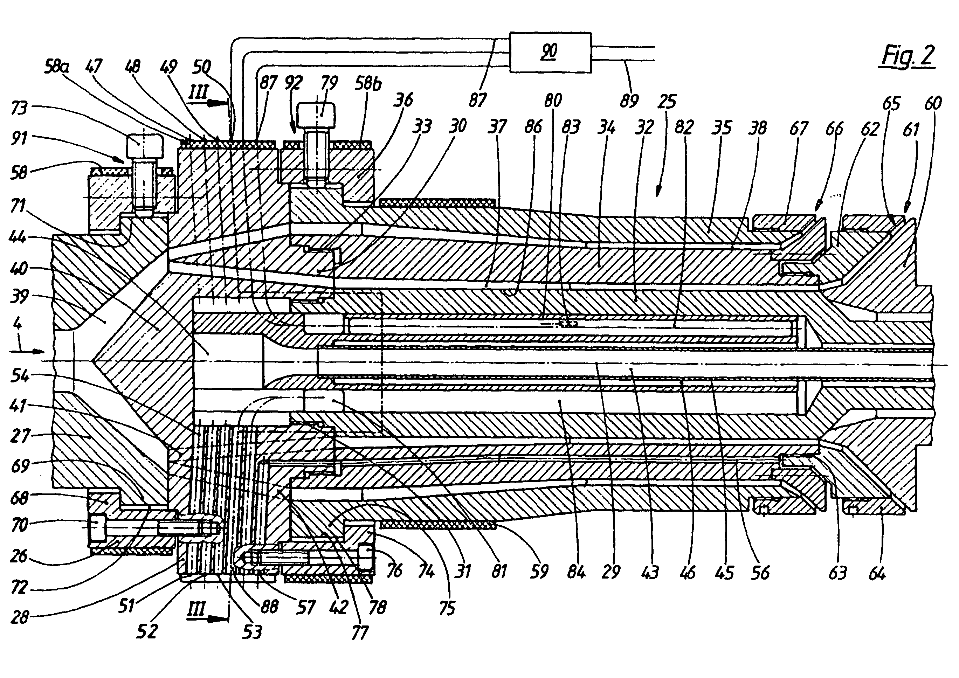

Der Innen-Düsendorn 32 und der Außen-Düsendom 34 begrenzen zwischen sich einen Innen-Kanal 37, während der Außen-Düsendorn 34 und der Außendüsen-Mantel 35 einen Außen-Kanal 38 zwischen sich begrenzen. Der Innen-Kanal 37 und der Außen-Kanal 38 sind - wie Fig. 2 erkennen läßt - an einen vom Extruder kommenden ringförmigen und sich erweiternden Spritzkanal 39 angeschlossen. Um einen stetigen Fluß der vom Extruder kommenden Kunststoffschmelze in die Kanäle 37, 38 zu erreichen, ist am Tragring 28 ein in den Spritzkanal 39 entgegen der Produktionsrichtung 4 gerichteter Torpedo 40 angebracht. Der Innen-Kanal 37 und der Außen-Kanal 38 durchsetzen den Tragring 28 bis zum Spritzkanal 39.

Im Tragring 28 ist der Innen-Kanal 37 von sich radial erstreckenden Innen-Stegen 41 und der Außen-Kanal 38 von sich ebenfalls radial zur Achse 29 erstreckenden Außen-Stegen 42 durchsetzt, so daß der Tragring 28 tatsächlich ein Teil ist. Wie Fig. 2 entnehmbar ist, erstreckt sich der Innen-Kanal 37 im Tragring 28 durch den Ringbund 30.

Der Innen-Düsendorn 32 ist mit einem konzentrisch zur Achse 29 verlaufenden Leitungs-Kanal 43 versehen, der in eine Kammer 44 im Tragring 28 mündet. In diesem Leitungs-Kanal 43 ist ein Schutzrohr 45 konzentrisch zur Achse 29 angeordnet, das von einem Luftspalt 46 umgeben ist. Das Schutzrohr 45 selber besteht aus Stahl.

Durch das Schutzrohr 45 im Leitungs-Kanal 43 sind nur angedeutete Versorgungs-Schläuche 47, 48, 49, 50, 51, 52, 53 geführt. Diese sind radial von außen durch den Tragring 28 in dessen Kammer 44 geführt, wozu im Tragring 28 etwa radial verlaufende, bis in die Kammer 44 geführte Bohrungen 54 ausgebildet sind, die selbstverständlich die Außen-Stege 42 und die Innen-Stege 41 durchsetzen, damit die Schläuche 47 bis 53 nicht mit der in den Kanälen 37 bzw. 38 transportierten Schmelze in Berührung kommen. Die Schläuche 47 bis 53 sind aus hochwarmfestem Kunststoff, beispielsweise Polytetrafluorethylen, hergestellt.

Im Außen-Düsendorn 34 sind Gaskanäle 56 ausgebildet, die sich in Produktionsrichtung 4 erstrecken und die an einen Zuführkanal 57 im Tragring 28 angeschlossen sind, der sich etwa radial zur Achse 29 erstreckt und den Steg 42 durchsetzt. Der Rohrkopf 25 ist über einen größeren Teil seiner Länge mit Heizungen 58, 58a, 58b, 59 umgeben, um ein Abkühlen der vom Spritzkanal 39 kommenden, durch die Kanäle 37, 38 geführten Schmelze zu vermeiden.

Am Innen-Düsendorn 32 ist ein sich in Produktionsrichtung 4 kegelstumpfförmig erweiternder Innendorn-Teller 60 angebracht, der einen als Temperierglocke ausgebildeten Innendorn trägt. Dieser Innendorn-Teller 60 begrenzt auf der radial zur Achse 29 innenliegenden Seite eine den Innen-Kanal 37 beendende Innen-Düse 61. Am Außen-Düsendorn 34 ist ein Verlängerungsteil 62 mittels einer Gewindeverbindung 63 angebracht, das den Innendorn-Teller 60 in Produktionsrichtung 4 gesehen teilweise umgibt und so einen erweiterten Bereich des Innen-Kanals 37 auf der Außenseite umgibt, und zwar bis vor die Innen-Düse 61. Diese wird auf der radial außenliegenden Seite von einem Innen-Düsenring 64 umgeben, der auf dem Verlängerungsteil 62 angeordnet ist.

Der Innen-Düsenring 64 ist hülsenförmig ausgebildet und weist eine die Innen-Düse 61 begrenzende, etwa sich in Produktionsrichtung erweiternde kegelstumpfförmige Düsen-Begrenzungsfläche 65 auf.

Weiterhin ist eine den Außen-Kanal 38 beendende Außen-Düse 66 vorgesehen, die von einem Außen-Düsenring 67 begrenzt wird, der in gleicher Weise wie der Innen-Düsenring 64 ausgestaltet ist.

Soweit die Vorrichtung bis hierher beschrieben ist, ist sie aus der EP 0 509 216 B1 (entsprechend US-PS 5 346 384) bekannt. Bezüglich der Einstellung der Innen-Düse 61 und der Außen-Düse 66 und bezüglich der Ausgestaltung eines sich an den Innendorn-Teller anschließenden Kalibrierdorns wird auf die EP 0 509 216 B1 (entsprechend US-PS 5 346 384) verwiesen.

Der in Produktionsrichtung 4 vor dem Tragring 28 angeordnete erste Justierring 26 weist einen radial zur Achse 29 vorstehenden Ringbund 68 auf, der einen Ringflansch 69 des Anschlußteils 27 übergreift. Der erste Justierring 26 ist mittels parallel zur Achse 29 verlaufender Schrauben 70 mit dem Tragring 28 verschraubt, wodurch der Rohrkopf 25 in Richtung der Achse 29 fest mit dem Anschlußteil 27 verbunden wird. Zwischen dem ersten Justiemng 26 und der Außenumfangsfläche 71 des Ringflansches 69 ist ein Spalt 72 vorgesehen. Außerdem sind im Justierring 26 radial zur Achse 29 angeordnete Justierschrauben 73 vorgesehen, die gegen die Außenumfangsfläche 71 anliegen. Durch entsprechende Einstellung der Justierschrauben 73 kann der Tragring 28 radial zur Achse 29 relativ zum Anschlußteil 27 verstellt werden.

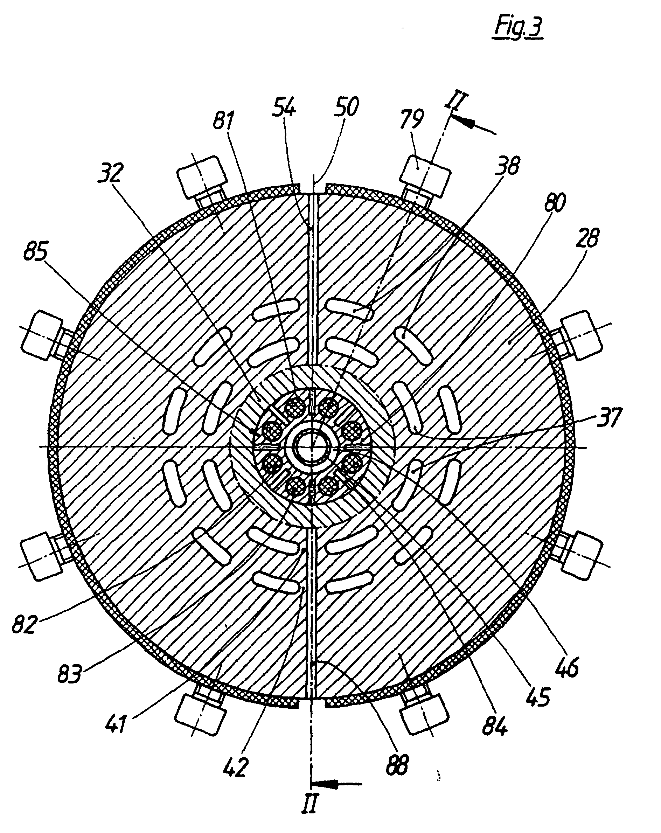

Der in Produktionsrichtung 4 dem Tragring 28 nachgeordnete zweite Justierring 36 ist in gleicher Weise aufgebaut wie der erste Justierring 26, d.h. er weist einen radial zur Achse 29 nach innen vorspringenden Ringbund 74 auf, der einen Ringflansch 75 des Außendüsen-Mantels 35 umgreift. Er ist mittels Schrauben 76 fest mit dem Tragring 28 verbunden, wodurch der Außendüsen-Mantel 35 in Richtung der Achse 29 fest mit dem Tragring 28 verbunden ist. Zwischen der Außenumfangsfläche 77 des Ringflansches 75 und dem Justierring 36 ist ein ringförmiger Spalt 78 ausgebildet. Im Justierring 36 sind - wie sich insbesondere aus Fig. 3 ergibt - in gleichmäßigen Winkelabständen radial zur Achse 29 angeordnete Justierschrauben 79 angeordnet, die gegen die Außenumfangsfläche 77 anliegen. Durch Verstellen dieser Justierschrauben 79 wird der Außendüsen-Mantel 35 radial zur Achse 29 und damit relativ zum Tragring 28 ausgerichtet.

Die Anordnung der Justierschrauben 73 in gleichen Winkelabständen ist gleich der Anordnung der Justierschrauben 79.

Zwischen dem Schutzrohr 45 und dem Innen-Düsendorn 32 ist ein Heizungs-Tragrohr 80 angeordnet, das das Schutzrohr 45 trägt und zu diesem den Luftspalt 46 begrenzt, und das sich gegen den Innen-Düsendorn 32 abstützt. Es weist - wie aus den Fig. 2 und 3 hervorgeht - parallel zur Achse 29 verlaufende Längsbohrungen 81 auf, in denen sich über einen wesentlichen Teil des Innen-Düsendorns 32 erstreckende elektrische Heizpatronen 82 angeordnet sind. An diesen Heizpatronen 82 sind jeweils Temperaturfühler 83 angebracht, die die Temperatur im Bereich der Heizpatrone 82 messen. Im dargestellten Ausführungsbeispiel sind gemäß Fig. 3 in gleichmäßigen Winkelabständen acht Heizpatronen 82 vorgesehen, die sich also jeweils über einen Winkelbereich von 45° erstrecken. Benachbarte Heizpatronen 82 sind durch zur Isolierung dienende Luftspalte 84 voneinander getrennt, die sich radial zur Achse 29 erstrecken. Dadurch werden thermisch weitgehend voneinander isolierte Heizsegmente 85 gebildet. Mittels dieser Heizsegmente 85 kann also die eine Innenwand 86 des Innen-Kanals 37 bildende Außenwand des Innen-Düsendorns 32 beheizt werden, und zwar mit über den Umfang unterschiedlichen Temperaturen.

Zur elektrischen Versorgung der Heizpatronen 82 sind elektrische Leitungen 87 vorgesehen, die durch entsprechende Bohrungen 88 im Tragring 28 geführt sind. Diese Bohrungen 88 verlaufen - gleichermaßen wie die Bohrungen 54 - durch die Außen-Stege 42 und die Innen-Stege 41. In gleicher Weise sind Temperatur-Meßleitungen 89 nach außen geführt. Meßleitungen 89 sind auf Eingänge einer Steuereinheit 90 geführt. Die elektrischen Leitungen 87 führen von Ausgängen der Steuereinheit 90 zu den Heizpatronen 82.

Der erste Justierring in der geschilderten Ausgestaltung mit den Justierschrauben 73 bildet eine erste Justiereinrichtung 91. Der zweite Justierring 36 in der geschilderten Ausgestaltung mit den Justierschrauben 79 bildet eine zweite Justiereinrichtung 92. Mit der ersten Justiereinrichtung 91 wird durch Verstellen der Justierschrauben 73 der gesamte Rohrkopf 25 einschließlich des Tragrings 28 radial zur Achse 29 derart gegenüber dem Anschlußteil 27 verstellt, daß die Weite des sich kegelförmig erweiternden Spritzkanals 39, der innen vom Torpedo 40 begrenzt wird, verändert wird. Diese Einstellung wird derartig durchgeführt, daß die vom Extruder kommende Schmelze über den gesamten Umfang des Innen-Kanals 37 derart strömt, daß der durch die Innen-Düse 61 austretende Schlauch über seinen ganzen Umfang gleichmäßige Dicke aufweist. Dieser Innenschlauch bildet das glattwandige Innenrohr des Verbund-Rohres 23. Wenn nach dieser Einstellung der aus der Außen-Düse 66 austretende Schmelze-Schlauch über seinen Umfang ungleichmäßige Dicke aufweisen sollte, dann wird mittels der zweiten Justiereinrichtung der Außendüsen-Mantel 35 radial zur Achse 29 verstellt, bis der aus der Außen-Düse 66 austretende Schlauch eine über den Umfang gleichmäßige Dicke aufweist und das gewellte Außenrohr des Verbund-Rohres 23 über den Umfang gleichmäßige Dicke aufweist.

Insbesondere bei größeren Nennweiten und bei einer Schmelze aus Polyvinylchlorid kann zusätzlich noch eine thermische Zentrierung mittels der Heizsegmente 85 vorgenommen werden. Durch über den Umfang variierende Oberflächentemperaturen der Innenwand 86 werden über den Umfang des Innen-Kanals 37 unterschiedliche Gleiteigenschaften für die Schmelze erreicht. Bei höherer Temperatur gleitet die PVC-Schmelze leichter, also schneller, d.h. in dem entsprechenden Bereich des mit höherer Temperatur heizenden Heizsegments 85 fließt relativ mehr Schmelze pro Zeiteinheit. Dieser physikalische Sachverhalt kann ebenfalls zum Ausgleich von Wanddickendifferenzen am durch die Innen-Düse 61 austretenden Schlauch genutzt werden.

## Patentansprüche

1. Vorrichtung zur Herstellung von Kunststoff-Verbund-Rohren (23), bei der sich auf einer Formstrecke (9) jeweils paarweise zu einer Form ergänzende Halbkokillen (2, 2') im Kreislauf in Produktionsrichtung (4) geführt angeordnet sind, wobei der Formstrecke (9) ein Rohrkopf (25) eines Extruders in Produktionsrichtung (4) vorgeordnet ist,
a) mit einer Mittel-Längs-Achse (29),
b) mit einem Anschlußteil (27) des Extruders,
c) mit einem Tragring (28),
d) mit einem am Tragring (28) angebrachten Innen-Düsendorn (32),
e) mit einem am Tragring (28) angebrachten, den Innen-Düsendorn (32) umgebenden Außen-Düsendorn (34);
f) mit einem den Außen-Düsendorn (34) umgebenden Außendüsen-Mantel (35),
g) mit einer ersten Justiereinrichtung (92), mittels derer der Außendüsen-Mantel (35) und der Tragring (28) in Richtung der Achse (29) fest miteinander verbunden sind und mittels derer der Außendüsen-Mantel (35) radial zur Achse (29) gegenüber dem Tragring (28) verstellbar ist,
i) wobei die erste Justiereinrichtung (92) einen ersten Justierring (36) aufweist, der mit einem Ringbund (74) versehen ist, der einen Ringflansch (75) des Außendüsen-Mantels (35) übergreift und wobei der erste Justierring (36) mittels Schrauben (76) mit dem Tragring (28) verbunden ist und
ii) wobei der erste Justierring (36) mit radial zur Achse (29) angeordneten ersten Radial-Justier-Mitteln zur radialen Justierung des Außendüsen-Mantels (35) gegenüber dem Tragring (28) versehen ist, wobei die ersten Radial-Justier-Mittel gegen eine Außenumfangsfläche (77) des Außendüsen-Mantels (35) anliegen,
h) mit einem zwischen dem Anschlußteil (27) und dem Tragring (28) ausgebildeten, mit dem Extruder verbundenen, ringförmigen Spritzkanal (39),
i) mit einem aus dem Spritzkanal (39) ausmündenden, durch den Tragring (28) in Produktionsrichtung (4) geführten und anschließend zwischen dem Innen-Düsendorn (32) und dem Außen-Düsendorn (34) begrenzten und in einer Innen-Düse (61) endenden Innen-Kanal (37) und
j) mit einem aus dem Spritzkanal (39) ausmündenden, durch den Tragring (28) in Produktionsrichtung (4) geführten und anschließend zwischen dem Außen-Düsendorn (34) und dem Außendüsen-Mantel (35) begrenzten und in einer Außen-Düse (66) endenden Außen-Kanal (38) **dadurch gekennzeichnet, daß**
k) eine zweite Justiereinrichtung (91) vorgesehen ist, mittels derer das Anschlußteil (27) und der Tragring (28) in Richtung der Achse (29) fest miteinander verbunden sind und mittels derer der Tragring (28) radial zur Achse (29) gegenüber dem Anschlußteil (27) verstellbar ist,
i) wobei die zweite Justiereinrichtung (91) einen zweiten Justierring (26) aufweist, der mit einem Ringbund (68) versehen ist, der einen Ringflansch (69) des Anschlußteils (27) übergreift und wobei der zweite Justierring (26) mittels Schrauben (70) mit dem Tragring (28) verbunden ist und
ii) wobei der zweite Justierring (26) mit radial zur Achse (29) angeordneten zweiten Radial-Justier-Mitteln zur radialen Justierung des Anschlußteils (27) gegenüber dem Tragring (28) versehen ist, wobei die zweiten Radial-Justier-Mittel gegen die Außenumfangsfläche (71) des Anschlußteils (27) anliegen.

2. Vorrichtung nach Anspruch 1, **dadurch gekennzeichnet, daß** der Spritzkanal (39) sich in Produktionsrichtung (4) erweitert.

3. Vorrichtung nach Anspruch 1 oder 2, **dadurch gekennzeichnet, daß** das erste Radial-Justier-Mittel als Justierschraube (79) ausgebildet ist.

4. Vorrichtung nach einem der Ansprüche 1 bis 3, **dadurch gekennzeichnet, daß** das zweite Radial-Justier-Mittel als Justierschraube (73) ausgebildet ist.

5. Vorrichtung nach Anspruch 4, **dadurch gekennzeichnet, daß** die Justierschrauben (73) des zweiten Justierrings (26) gegen eine Außenumfangsfläche (71) des Ringflansches (69) anliegen.

6. Vorrichtung nach Anspruch 3, **dadurch gekennzeichnet, daß** die Justierschrauben (79) des ersten Justierrings (36) gegen eine Außenumfangsfläche (77) des Ringflansches (75) anliegen.

7. Vorrichtung nach einem der Ansprüche 1 bis 6, **dadurch gekennzeichnet, daß** im Innen-Düsendorn (32) parallel zur Achse (29) verlaufende, jeweils voneinander thermisch isolierte, unabhängig voneinander beheizbare Heizsegmente (85) angeordnet sind.

8. Vorrichtung nach Anspruch 7, **dadurch gekennzeichnet, daß** die Heizsegmente (85) in einem Heizungs-Tragrohr (80) ausgebildet sind, das mit Längsbohrungen (81) versehen ist, in denen elektrische Heizpatronen (82) angeordnet sind.

9. Vorrichtung nach Anspruch 7 oder 8, **dadurch gekennzeichnet, daß** zwischen zwei voneinander benachbarten Heizpatronen (82) radial zur Achse (29) verlaufende Luftspalte (84) ausgebildet sind.

10. Vorrichtung nach einem der Ansprüche 7 bis 9, **dadurch gekennzeichnet, daß** jedes Heizsegment (85) mit mindestens einem Temperaturfühler (83)versehen ist.

## Claims

1. An apparatus for the production of plastic compound pipes (23), in which half shells (2, 2') are disposed to circulate in the direction (4) of production, completing each other in pairs to form a mold on a molding path (9), a pipe head (25) of an extruder being disposed upstream of the molding path (9) in the direction (4) of production, comprising
a) a central longitudinal axis (29),
b) a connecting piece (27) of the extruder,
c) a supporting ring (28),
d) an internal mandrel (32) mounted on the supporting ring (28),
e) an external mandrel (34) mounted on the supporting ring (28) and surrounding the internal mandrel (32),
f) an external nozzle jacket (35) surrounding the external mandrel (34),
g) a first adjusting device (92), by means of which the external nozzle jacket (35) and the supporting ring (28) are tightly joined to each other in the direction of the axis (29), and by means of which the external nozzle jacket (35) is adjustable relative to the supporting ring (28) radially to the axis (29),
i) wherein the first adjusting device (92) comprises a first adjusting ring (36) provided with an annular collar (74) which overlaps an annular flange (75) of the external nozzle jacket (35), and wherein the first adjusting ring (36) is joined to the supporting ring (28) by means of screws (76) and
ii) wherein the first adjusting ring (36) comprises first radial adjusting means which are disposed radially to the axis (29) for the radial adjustment of the external nozzle jacket (35) relative to the supporting ring, wherein the first radial adjusting means bear against a periphery (77) of the external nozzle jacket (35)
h) an annular injection channel (39) formed between the connecting piece (27) and the supporting ring (28) and connected with the extruder,
i) an internal channel (37), which discharges from the injection channel (39), which is led through the supporting ring (28) in the direction (4) of production, and which is subsequently defined between the internal mandrel (32) and the external mandrel (34) and terminates in an internal nozzle (61), and
j) an external channel (38), which discharges from the injection channel (39), which is led through the supporting ring (28) in the direction (4) of production, and which is subsequently defined between the external mandrel (34) and the external nozzle jacket (35) and terminates in an external nozzle (66), **characterized in that**
k) a second adjusting device (91) is provided, by means of which the connecting piece (27) and the supporting ring (28) are tightly joined to each other in the direction of the axis (29) and by means of which the supporting ring (28) is adjustable relative to the connecting piece (27) radially to the axis (29),
i) wherein the second adjusting device (91) comprises a second adjusting ring (26) provided with an annular collar (68) which overlaps an annular flange (69) of the connecting piece (27), and wherein the second adjusting ring (26) is joined to the supporting ring (28) by means of screws (70) and
ii) wherein the second adjusting ring (26) comprises second radial adjusting means which are disposed radially to the axis (29) for the radial adjustment of the connecting piece (27) relative to the supporting ring, wherein the second radial adjusting means bear against the periphery (71) of the connecting piece (27).

2. An apparatus according to claim 1, **characterized in that** the injection channel (39) expands in the direction (4) of production.

3. An apparatus according to claim 1 or 2, **characterized in that** the first radial adjusting means is an adjusting screw (79).

4. An apparatus according to one of claims 1 to 3, **characterized in that** the second radial adjusting means is an adjusting screw (73).

5. An apparatus according to claim 4, **characterized in that** the adjusting screws (73) of the second adjusting ring (26) bear against the periphery (71) of the annular flange (69).

6. An apparatus according to claim 3, **characterized in that** the adjusting screws (79) of the first adjusting ring (36) bear against a periphery (77) of the annular flange (75).

7. An apparatus according to one of claims 1 to 6, **characterized in that** heating segments (85) are disposed in the internal mandrel (32), which extend parallel to the axis (29), which are thermally insulated from each other and are heatable individually.

8. An apparatus according to claim 7, **characterized in that** the heating segments (85) are formed in a heating supporting pipe (80) with lengthwise bores (81), in which electric heating cartridges (82) are disposed.

9. An apparatus according to claim 7 or 8, **characterized in that** air gaps (84) are formed between two neighboring heating cartridges (82), extending radially to the axis (29).

10. An apparatus according to one of claims 7 to 9, **characterized in that** each heating segment (85) is provided with at least one temperature sensor (83).

## Revendications

1. Dispositif de fabrication de tubes composites en matière plastique (23) dans lequel des demi-coquilles (2, 2'), qui se complètent par paires respectives pour former un moule sur un banc de mise en forme (9), sont agencées de manière guidée dans le circuit en direction de production (4), une tête tubulaire (25) d'une extrudeuse étant agencée en amont du banc de mise en forme en direction de production (4), comportant :
a) un axe longitudinal médian (29),
b) une partie de raccordement (27) de l'extrudeuse,
c) un anneau porteur (28),
d) un mandrin intérieur de filière (32) monté sur l'anneau porteur (28),
e) un mandrin extérieur de filière (34) entourant le mandrin intérieur de filière (32) et monté sur l'anneau porteur (28) ;
f) une enveloppe de filière extérieure (35) entourant le mandrin extérieur de filière (34),
g) un premier dispositif d'ajustage (92) au moyen duquel l'enveloppe de filière extérieure (35) et l'anneau porteur (28) sont fermement reliés l'une à l'autre en direction de l'axe (29) et au moyen duquel l'enveloppe de filière extérieure (35) est radialement réglable par rapport à l'axe (29) vis-à-vis de l'anneau porteur (28),
i) le premier dispositif d'ajustage (92) présente une première bague d'ajustage (36) qui est pourvue d'une collerette annulaire (74) et qui chevauche une bride annulaire (75) de l'enveloppe de filière extérieure (35) et la première bague d'ajustage (36) est reliée à l'anneau porteur (28) au moyen de vis (76), et
ii) la première bague d'ajustage (36) est pourvue de premiers moyens d'ajustage radiaux agencés radialement à l'axe (29) pour ajuster radialement l'enveloppe de filière extérieure (35) par rapport à l'anneau porteur (28), les premiers moyens d'ajustage radiaux sont appliqués contre une surface périphérique extérieure (77) de l'enveloppe de filière extérieure (35),
h) un canal d'injection (39) annulaire réalisé entre la partie de raccordement (27) et l'anneau porteur (28) et relié à l'extrudeuse,
i) un canal intérieur (37) débouchant hors du canal d'injection (39), guidé à travers l'anneau porteur (28) en direction de production (4) et ensuite limité entre le mandrin intérieur de filière (32) et le mandrin extérieur de filière (34) et se terminant dans une filière intérieure (61), et
j) un canal extérieur (38) débouchant hors du canal d'injection (39), guidé à travers l'anneau porteur (28) en direction de production (4) et ensuite limité entre le mandrin extérieur de filière (34) et l'enveloppe de filière extérieure (35) et se terminant dans une filière extérieure (66),
**caractérisé en ce que** :
k) il est prévu un deuxième dispositif d'ajustage (91) au moyen duquel la partie de raccordement (27) et l'anneau porteur (28) sont reliés fermement l'une à l'autre en direction de l'axe (29) et au moyen duquel l'anneau porteur (28) est réglable radialement à l'axe (29) par rapport à la partie de raccordement (27),
i) le deuxième dispositif d'ajustage (91) présente une deuxième bague d'ajustage (26) qui est pourvue d'une collerette annulaire (68) et qui chevauche une bride annulaire (69) de la partie de raccordement (27) et la deuxième bague d'ajustage (26) est reliée à l'anneau porteur (28) au moyen de vis (70), et
ii) la deuxième bague d'ajustage (26) est pourvue de deuxièmes moyens d'ajustage radiaux agencés radialement à l'axe (29) pour ajuster radialement la partie de raccordement (27) par rapport à l'anneau porteur (28), et les deuxièmes moyens d'ajustage radiaux sont appliqués contre la surface périphérique extérieure (71) de la partie de raccordement (27).

2. Dispositif selon la revendication 1,
**caractérisé en ce que** le canal d'injection (39) s'évase en direction de production (4).

3. Dispositif selon l'une ou l'autre des revendications 1 et 2, **caractérisé en ce que** le premier moyen d'ajustage radial est réalisé sous forme de vis d'ajustage (79).

4. Dispositif selon l'une quelconque des revendications 1 à 3, **caractérisé en ce que** le deuxième moyen d'ajustage radial est réalisé sous forme de vis d'ajustage (73).

5. Dispositif selon la revendication 4,
**caractérisé en ce que** les vis d'ajustage (73) de la deuxième bague d'ajustage (26) sont en appui contre une surface périphérique (71) de la bride annulaire (69).

6. Dispositif selon la revendication 3,
**caractérisé en ce que** les vis d'ajustage (79) de la première bague d'ajustage (36) sont en appui contre une surface périphérique (77) de la bride annulaire (75).

7. Dispositif selon l'une quelconque des revendications 1 à 6, **caractérisé en ce que** des segments de chauffage (85) susceptibles d'être chauffés indépendamment les uns des autres et isolés les uns vis-à-vis des autres du point de vue thermique sont agencés parallèlement à l'axe (29) dans le mandrin intérieur de filière (32).

8. Dispositif selon la revendication 7,
**caractérisé en ce que** les segments de chauffage (85) sont réalisés dans un tube porteur de chauffage (80) qui est pourvu de perçages longitudinaux (81) dans lesquels sont agencés des cartouches de chauffage (82) électriques.

9. Dispositif selon l'une ou l'autre des revendications 7 et 8, **caractérisé en ce que** des fentes d'air (84) s'étendant radialement à l'axe (29) sont réalisées entre deux cartouches de chauffage (82) voisines l'une de l'autre.

10. Dispositif selon l'une quelconque des revendications 7 à 9, **caractérisé en ce que** chaque segment de chauffage (85) est pourvu d'au moins un capteur de température (83).
